# EUROPÄISCHE PATENTSCHRIFT

(11) **EP 3 721 697 B1**
(45) Veröffentlichungstag und Bekanntmachung des Hinweises auf die Patenterteilung: **24.08.2022**
(21) Anmeldenummer: 20154856.7
(22) Anmeldetag: 19.03.2020
(51) Int. Cl.: A01F 7/06, A01F 12/44

(54) **MÄHDRESCHER MIT EINER REINIGUNGSEINRICHTUNG**
COMBINE HARVESTER WITH A CLEANING DEVICE
MOISSONNEUSE-BATTEUSE DOTÉE D'UN DISPOSITIF DE NETTOYAGE

(30) Priorität: 03.04.2019 DE 102019108734; 03.04.2019 DE 102019108736
(43) Veröffentlichungstag der Anmeldung: 14.10.2020
(73) Patentinhaber: CLAAS Selbstfahrende Erntemaschinen GmbH, 33428 Harsewinkel (DE)
(72) Erfinder: Schwarz, Michael, 33378 Rheda-Wiedenbrück (DE)
(74) Vertreter: CLAAS Gruppe

(56) Entgegenhaltungen:
- EP-A1- 3 453 249
- DE-A1- 1 782 443
- DE-A1- 3 016 180
- DE-B- 1 121 873
- DE-C2- 2 835 899
- GB-A- 1 029 370

## Beschreibung

Die vorliegende Erfindung betrifft einen Mähdrescher mit einer Reinigungseinrichtung gemäß dem Oberbegriff des Anspruches 1.

Mähdrescher weisen üblicherweise verschiedene der das Entkörnen des Ernteguts vornehmenden Drescheinrichtung nachgeschaltete Einrichtungen auf, um die beim Dreschen separierten Erntegutbestandteile zu entmischen. So ist regelmäßig der Drescheinrichtung eine Trenneinrichtung nachgelagert, die aus dem gedroschenen Erntegutstrom den Anteil an freien beweglichen Körnern abscheidet und das übrige Stroh der Häckseleinrichtung des Mähdreschers zuführt. Eine solche Trenneinrichtung kann beispielsweise ein Hordenschüttler oder ein Abscheidesystem mit einem oder zwei in Längsrichtung eingebauten Rotoren sein. Neben der Trenneinrichtung verfügt ein Mähdrescher regelmäßig auch über eine Reinigungseinrichtung, der das in der Drescheinrichtung und/oder der Trenneinrichtung abgeschiedene Korn zugeführt wird. So führen die Körner noch viele Nichtkornbestandteile (Spreu und Strohpartikel) mit, die in der Reinigungseinrichtung vom Korn getrennt werden.

Aus dem Stand der Technik sind eine Vielzahl verschiedener Reinigungseinrichtungen zum Entmischen des Ernteguts und dadurch Trennen des Korns von Nichtkornbestandteilen bekannt. Diese basieren regelmäßig auf einem kombinierten Sieben und Sichten, das heißt das Reinigungsgut aus Körnern und Nichtkornbestandteilen wird beim Sieben durch einen Luftstrom angeströmt. Das gereinigte Korn wird dann anschließend, beispielsweise mittels eines Kornelevators, in einen Korntank des Mähdreschers verbracht.

So ist aus der DE 198 07 145 A1 ein Mähdrescher mit einer Reinigungseinrichtung bekannt, welche zwei sich im Wesentlichen horizontal erstreckende, zueinander parallele Siebe umfasst, welche in Längsrichtung oszillierend angetrieben sind. Ein unterhalb der Siebe angeordnetes Gebläse beaufschlagt die beiden Siebe von unten mit einem Luftstrom. Durch den Luftstrom und die Oszillationsbewegung werden Nichtkornbestandteile über die Siebe hinwegbewegt und aus dem Mähdrescher ausgebracht. Die Körner hingegen gelangen durch in ihrer Öffnungsweite verstellbare Öffnungen in den Oberflächen der Siebe hindurch zu einer Kornförderschnecke, welche das Korn weiter zu einem Kornelevator fördert. Die Öffnungen der Siebe sind durch verschwenkbare Lamellen ausgebildet. Nachteilig an der Reinigungseinrichtung gemäß der DE 198 07 145 A1 ist, dass aufgrund des Wirkprinzips der ebenen, luftdurchströmten die Quantität der Reinigungsleistung in der Regel nur durch eine Vergrößerung der Abscheidefläche verbessern lässt.

Aus der DE 28 35 899 C2 ist ein Mähdrescher mit einer Reinigungseinrichtung bekannt, die auf dem Prinzip der rotierenden Reinigung basiert. Hierbei wird das zu entmischende Erntegut statt über im Wesentlichen ebene Siebe in eine rotierbare Siebeinrichtung, auch als Siebrotor bezeichnet, geführt, die einen siebförmigen, also mit einer Sieblochung versehenen, Siebmantel aufweist. Die Sieblochung weist kreisförmige Öffnungen auf, welche eine geringe Abscheidewirkung besitzen.

Aus der EP 3 453 249 A1 ist ein Mähdrescher mit den Merkmalen des Oberbegriffs von Anspruch 1 bekannt.

Ausgehend vom vorstehend genannten Stand der Technik liegt der Erfindung die Aufgabe zugrunde, einen Mähdrescher mit einer Reinigungseinrichtung der eingangs genannte Art weiterzubilden, so dass die Reinigungseinrichtung sich durch eine höhere Reinigungsleistung, d.h. eine höhere Abscheiderate, auszeichnet. Die Aufgabe wird erfindungsgemäß durch einen Mähdrescher mit den Merkmalen des Anspruches 1 gelöst. Vorteilhafte Weiterbildungen sind Gegenstand der Unteransprüche.

Gemäß dem Anspruch 1 wird ein Mähdrescher mit einer Reinigungseinrichtung, welche Bestandteile eines Erntegutstroms in Korn und Nichtkornbestandteile durch Entmischen trennt, vorgeschlagen, wobei die Reinigungseinrichtung eine um eine Drehachse rotierende Siebeinrichtung mit einem zumindest abschnittsweise siebförmigen Siebmantel, der sich in einer Umfangsrichtung um die Drehachse erstreckt, aufweist, wobei die Entmischung durch Überlagerung einer Drehbewegung und einer quer zur Drehachse orientierten Oszillationsbewegung des Siebmantels erfolgt, wobei der Siebmantel eine mit Öffnungen durchsetzte Oberfläche aufweist, wobei die jeweilige Öffnung einen sich senkrecht zur Oberfläche des Siebmantels erstreckenden Öffnungsquerschnitt aufweist, welcher durch zumindest eine in dem Siebmantel im Bereich der jeweiligen Öffnung angeordnete, senkrecht zur Drehachse orientierte Auswölbung auf der Oberfläche begrenzt ist und wobei die Oberfläche (26, 26') eine im Wesentlichen wellenförmige Struktur aufweist. Mit anderen Worten erstreckt sich der Öffnungsquerschnitt der jeweiligen Öffnung abschnittsweise in Richtung der Oszillationsbewegung des Siebmantels. Hierdurch wird eine Erhöhung der Luftdurchlässigkeit des Siebmantels sowie damit einhergehend eine Verbesserung der Abscheideleistung erreicht. Weiterhin wird durch die im Wesentlichen wellenförmige Struktur der Sieboberfläche eine größere wirksame Abscheidefläche bereitgestellt.

Insbesondere kann die zumindest eine Auswölbung als eine Halbschale ausgeführt sein. Die Halbschale kann eine Bogenform aufweisen. Der Radius der als Halbschale ausgeführten Auswölbung nimmt ausgehend vom Randbereich des senkrecht zur Oberfläche orientierten Öffnungsquerschnitts in Längsrichtung der Auswölbung ab. Somit stellt sich ein im Wesentlichen halbkreisförmiger Öffnungsquerschnitt der Öffnung ein. Die als Halbschale ausgeführte Auswölbung kann auch eine dreieckförmige Gestalt aufweisen, wobei die Höhe ausgehend vom Randbereich des senkrecht zur Oberfläche orientierten Öffnungsquerschnitts in Längsrichtung der Auswölbung abnimmt.

Dabei kann die zumindest eine Auswölbung jeweils in Rotationsrichtung oder entgegen der Rotationsrichtung der Siebeinrichtung angeordnet sein. Eine Anordnung in der Auswölbung in Rotationsrichtung der Siebeinrichtung bewirkt ein Anheben der schwereren Kornbestandteile, bis diese am Scheitel der Auswölbung aufgrund der Zentrifugalkraft durch die Öffnung hindurchtreten können. Hingegen wird die leichtere Spreu über die Öffnung hinweggehoben.

Insbesondere kann die zumindest eine Auswölbung sich radial nach innen erstrecken. Dabei bedeutet eine radiale Erstreckung nach innen, dass die Auswölbung der Drehachse zugewandt ist.

Bevorzugt kann die zumindest eine Auswölbung unter einem Winkel ungleich 0° zu ihrer Rotationsebene geneigt orientiert sein. Hierdurch lässt sich die Abscheiderate erhöhen. Bevorzugt liegt der Winkel in einem Bereich von 30° bis 60°.

Des Weiteren kann die jeweilige Öffnung in der Oberfläche einen Öffnungsabschnitt aufweisen, welcher eine Erstreckung in Längsrichtung aufweist, die größer als eine Erstreckung in Querrichtung ist, wobei eine in Längsrichtung verlaufende Längsachse des Öffnungsabschnitts unter einem Winkel ungleich 0° zur Rotationsebene geneigt orientiert ist. Bevorzugt liegt der Winkel in einem Bereich von 30° bis 60°.

Bevorzugt kann sich der Öffnungsabschnitt an die Auswölbung der jeweiligen Öffnung derart anschließt, dass der Öffnungsabschnitt und die Auswölbung einen im Wesentlichen ellipsoiden Umriss aufweisen. Hierzu kann der Öffnungsabschnitt eine komplementär zur Auswölbung geformte Außenkontur aufweisen.

Insbesondere kann der sich senkrecht zur Oberfläche des Siebmantels erstreckende Öffnungsquerschnitt einer jeweiligen Öffnung durch jeweils zwei Auswölbungen begrenzt sein, die einander gegenüberliegend und mit gegensinniger radialer Erstreckung an der Oberfläche des Siebmantels angeordnet sind. Vorzugsweise kann der Siebmantel sich zu seinem unteren Ende hin verjüngen, wobei die Anzahl der Öffnungen in der Oberfläche des Siebmantels in Abhängigkeit von einem sich in axialer Richtung der Siebeinrichtung ändernden Durchmesser des Siebmantels variiert. Die Anordnung der Öffnungen in der Oberfläche ist vorzugsweise inhomogen verteilt. So ist der Siebmantel besonders bevorzugt konusförmig, kegelstumpfförmig, pyramidenförmig oder pyramidenstumpfförmig ausgeführt, hat also insbesondere eine schräg verlaufende Wand, wobei sich der Siebmantel zu seinem unteren Ende hin verjüngt. Am unteren Ende weist die Siebeinrichtung insbesondere einen Boden auf, wohingegen das in axialer Richtung entgegengesetzte Ende nicht verschlossen ist. Besonders bevorzugt wird das zu entmischende Erntegut vom oberen in Richtung des unteren Endes, also in Richtung der Verjüngung des Siebmantels, in die Siebeinrichtung eingeleitet. Insbesondere werden die Nichtkornbestandteile in entgegengesetzter Richtung, also in Richtung von dem unteren zum oberen Ende, aus der Siebeinrichtung ausgeleitet. Insbesondere nimmt die Anzahl der Öffnungen mit in axialer Richtung zunehmendem Durchmesser des Siebmantels ab. D.h., dass im Bereich des kleinsten Durchmessers des Siebmantels, insbesondere oberhalb des Bodens, die Anzahl der Öffnungen am höchsten sein kann, wodurch sich hier die größte freidurchströmte Oberfläche des Siebmantels ergibt.

Gemäß einer bevorzugten Ausführungsform können die Öffnungen symmetrisch oder asymmetrisch auf der Oberfläche des Siebmantels verteilt angeordnet sein.

Vorzugsweise kann die Struktur der Oberfläche in axialer Richtung der Siebeinrichtung im Wesentlichen abgewinkelt oder gestuft ausgeführt sein. Der Siebmantel erstreckt sich koaxial zur Drehachse der Siebeinrichtung. Die abgewinkelte oder gestufte Ausführung der Struktur der Sieboberfläche verläuft somit bezogen auf die Drehachse quer zu dieser in Umfangsrichtung des Siebmantels. Vorzugsweise kann die Struktur einen Längsschnitt aufweisen, der im Wesentlichen der Form von hintereinander angeordneten gleichschenkligen Dreiecken entspricht. Dadurch stellt sich ein symmetrischer Verlauf der abgewinkelten bzw. abgestuften Sieboberfläche ein.

Insbesondere kann die Struktur in Längsrichtung der Sieboberfläche einen periodischen Verlauf aufweisen. Hierbei kann die Struktur zunächst einen ersten Abschnitt mit einem Anstieg der Sieboberfläche, d.h. einen abnehmenden radialen Abstand in Bezug auf die Drehachse aufweisen. Der erste Abschnitt erstreckt sich bis zu einem ersten Scheitel- oder Wendepunkt. Nach dem ersten Scheitel- oder Wendepunkt weist die Struktur einen zweiten Abschnitt mit einer negativen Steigung auf, d.h. einen zunehmenden radialen Abstand in Bezug auf die Drehachse. Der zweite Abschnitt erstreckt sich bis zu einem zweiten Scheitel- oder Wendepunkt. Nach dem Passieren des zweiten Scheitel- oder Wendepunktes schließen sich wechselweise ein weiterer erster Abschnitt und ein sich daran anschließender zweiter Abschnitt an. Diese Ausprägung der Struktur setzt sich in axialer Richtung des Siebmantels periodisch fort.

Bevorzugt kann der Siebmantel über seinen Umfang verteilt mehrere Umfangssegmente aufweisen, deren Sieboberfläche in axialer Richtung der Siebeinrichtung abgewinkelt oder gestuft ausgeführt ist. Durch die Aufteilung in mehrere Umfangssegmente kann die Fertigung vereinfacht werden. Zudem können die Umfangssegmente erntegutabhängig austauschbar und/oder einstellbar sein, was den zusätzlichen Vorteil hat, dass bei einem Defekt in einem Abschnitt des Umfangs des Siebmantels nicht der gesamte Siebmantel, sondern lediglich ein Umfangssegment ausgetauscht werden muss.

Vorzugsweise kann die Struktur einen Längsschnitt aufweisen, der im Wesentlichen der Form von hintereinander angeordneten gleichschenkligen Dreiecken entspricht. Dadurch stellt sich ein symmetrischer Verlauf der abgewinkelten bzw. abgestuften Sieboberfläche ein.

Alternativ kann die Struktur einen Längsschnitt aufweisen, der im Wesentlichen der Form von hintereinander angeordneten rechtwinkligen Dreiecken entspricht. Dadurch stellt sich ein unsymmetrischer Verlauf der abgewinkelten bzw. abgestuften Sieboberfläche ein.

Weiterhin kann auch vorgesehen sein, dass die Struktur einen Längsschnitt aufweist, der im Wesentlichen der Form von hintereinander angeordneten Kreisbögen entspricht.

Insbesondere kann die Struktur der Sieboberfläche an ihren Außenseiten durch Abdeckelemente begrenzt sein. Durch die Abdeckelemente können Aussparungen, die sich zwischen Rahmenelementen und der mit der Struktur versehenen Sieboberfläche ausbilden, verschlossen werden. Hierdurch kann ein ungewolltes und unkontrolliertes Hindurchtreten von Erntegut, insbesondere von Nichtkornbestandteilen, vermieden werden.

Vorzugsweise sind die Öffnungen kreisförmig ausgeführt, wodurch die Herstellung des Siebmantels bzw. der Umfangssegmente vereinfacht wird.

Die vorliegende Erfindung wird nachstehend anhand eines in den Zeichnungen dargestellten Ausführungsbeispiels näher erläutert.

Es zeigen:
- Fig. 1: eine schematische Seitenansicht eines Mähdreschers;
- Fig. 2: eine schematische Darstellung einer Reinigungseinrichtung des Mähdreschers aus Fig. 1;
- Fig. 3: eine schematische Teilansicht einer Oberfläche eines Siebmantels der Reinigungseinrichtung sowie eine Detailansicht einer Öffnung in der Oberfläche;
- Fig. 4: eine schematische Teilansicht einer Oberfläche des Siebmantels sowie eine Detailansicht einer Öffnung in der Oberfläche gemäß einer weiteren Ausführungsform;
- Fig. 5: eine schematische Teilansicht einer Oberfläche des Siebmantels sowie eine Detailansicht einer Öffnung in der Oberfläche gemäß einer dritten Ausführungsform;
- Fig. 6: eine schematische Darstellung eines Umfangsegmentes eines Siebmantels der Reinigungseinrichtung;
- Fig. 7: schematisch eine perspektivische Teilansicht einer Sieboberfläche des Umfangsegmentes gemäß Fig. 6; und
- Fig. 8: schematisch eine perspektivische Teilansicht des Umfangsegmentes gemäß Fig. 6 mit einer Sieboberfläche gemäß einer zweiten Ausführungsform.

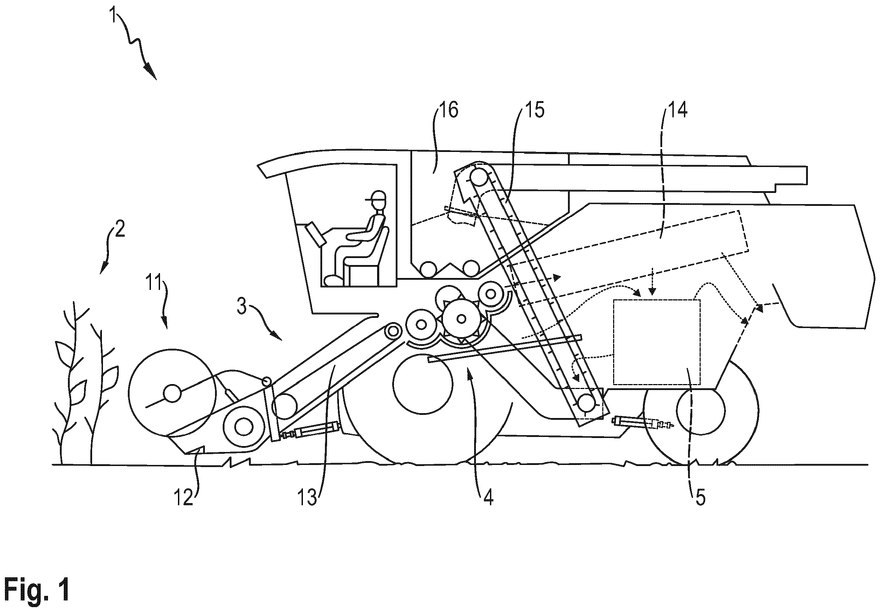

Fig. 1 zeigt eine schematische Seitenansicht eines Mähdreschers 1, der zur Verarbeitung von aus einem Feldbestand 2 aufgenommenem Erntegut eingerichtet ist. Der Mähdrescher 1 umfasst eine Einzugsanordnung 3 zum Aufnehmen des Ernteguts, eine Drescheinrichtung 4 sowie eine Reinigungseinrichtung 5 zum Entmischen des Ernteguts, nachdem dieses die Drescheinrichtung 4 passiert hat, wodurch das Korn aus dem Erntegut von Nichtkornbestandteilen getrennt wird. Der Reinigungsprozess erfolgt durch ein kombiniertes Sieben und Sichten des Ernteguts in einer um eine Drehachse 6 rotierenden Siebeinrichtung 7, die einen zumindest abschnittsweise siebförmigen Siebmantel 8 aufweist, der sich in einer Umfangsrichtung um die Drehachse 6 erstreckt.

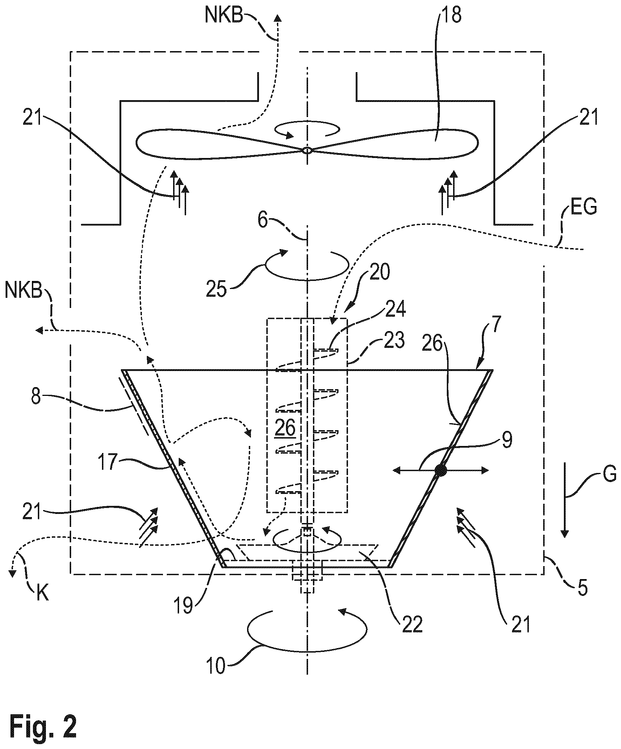

Die Entmischung bzw. Reinigung erfolgt durch Überlagerung einer Drehbewegung und Oszillationsbewegung des Siebmantels 8, wobei die Oszillationsbewegung des Siebmantels 8 quer zur Drehachse 6 der Siebeinrichtung 7 gerichtet ist. Die Oszillationsbewegung des Siebmantels 8 ist in Fig. 2 schematisch durch einen Doppelpfeil 9 und die Rotationsrichtung der Drehbewegung des Siebmantels 8 durch einen gebogenen, im Uhrzeigersinn verlaufenden Pfeil 10 dargestellt. Eine Überlagerung der Drehbewegung und der quer zur Drehachse 6 gerichteten Oszillationsbewegung des Siebmantels 8 verbessert den Reinigungseffekt der Reinigungseinrichtung 5. Dabei wird das zu entmischende Erntegut in der Siebeinrichtung 7 nicht nur der Schwerkraft G und einer rotationsbedingten Fliehkraft ausgesetzt, sondern auch einer oszillationsbedingten Kraft, die wiederholt radial nach innen und somit entgegen der Fliehkraft wirkt. Die Kombination aus den verschiedenen, auf das Erntegut einwirkenden Kräften führt zu einer besseren und schnelleren Separierung von Korn und Nichtkornbestandteilen und erhöht dadurch auch den Korndurchsatz der Reinigungseinrichtung 5.

Bei der Einzugsanordnung 3 kann es sich um eine Vorsatzanordnung 11 handeln, welche wie in Fig. 1 dargestellt ein Schneidwerk 12 sowie einen Schrägförderer 13 aufweist, wobei der Schrägförderer 13 das abgeschnittene und eingezogene Erntegut als Erntegutstrom zur weiteren Verarbeitung im Mähdrescher 1 zur Drescheinrichtung 4 fördert. Die Drescheinrichtung 4 trennt das Korn vom Stroh im Erntegut, wobei der entsprechende überwiegend Korn enthaltende Erntegutanteil von der Drescheinrichtung 4 unmittelbar der nachgelagerten Reinigungseinrichtung 5 zugeführt wird, wohingegen der entsprechende überwiegend Stroh enthaltende Erntegutanteil einer Trenneinrichtung 14 zugeführt wird, die, beispielsweise über einen Hordenschüttler oder einen Axialrotor, freie bewegliche Körner aus dem überwiegend Stroh enthaltenden Erntegutanteil abscheidet. Das übrigbleibende Stroh wird dann am rückwärtigen Ende des Mähdreschers 1 ausgeworfen. Der in der Trenneinrichtung 14 erzeugte, weitere überwiegend Korn enthaltende Erntegutanteil wird dann ebenfalls der Reinigungseinrichtung 5 zugeführt und zusammen mit dem unmittelbar von der Drescheinrichtung 4 zugeführten, überwiegend Korn enthaltenden Erntegutanteil in die rotierende Siebeinrichtung 7 geleitet.

Nach dem erfolgten Entmischen des Ernteguts in der Reinigungseinrichtung 5 werden die Nichtkornbestandteile ebenfalls am rückwärtigen Ende des Mähdreschers 1 ausgeworfen, wohingegen das gereinigte Korn über einen Kornelevator 15 einem Korntank 16 des Mähdreschers 1 zugeführt wird.

Es sind nun verschiedene Möglichkeiten einer Oszillationsbewegung denkbar. So ist es bevorzugt, wenn sich bei der Oszillationsbewegung des Siebmantels 8 die radiale Position der Drehachse 6 relativ zur Drescheinrichtung 4 nicht verändert, die Drehachse 6 sich also nicht oszillierend mitbewegt. In diesem Fall weist der Siebmantel 8 über seinen Umfang verteilt mehrere Umfangssegmente 17 auf, von denen jedes einzelne eine Oszillationsbewegung quer zur Drehachse 6 zwischen einer radial äußeren Stellung und einer radial inneren Stellung ausführt. Die Umfangssegmente 17 können erntegutabhängig austauschbar und/oder einstellbar sein, was den zusätzlichen Vorteil hat, dass bei einem Defekt in einem Abschnitt des Umfangs des Siebmantels 8 nicht der gesamte Siebmantel 8, sondern lediglich ein Umfangssegment 17 ausgetauscht werden muss. Grundsätzlich ist es aber auch denkbar, dass sich die radiale Position der Drehachse 6 der Oszillationsbewegung entsprechend ändert, sich also die Drehachse 6 oszillierend mitbewegt, wobei insbesondere die Oszillationsbewegung der Drehachse 6 allein die Oszillationsbewegung des Siebmantels 8 hervorruft.

Die Oszillationsbewegung des Siebmantels 8 erfolgt bevorzugt ausschließlich quer zur Drehachse 6, wobei sich die axiale Position der Siebeinrichtung 7 und/oder des Siebmantels 8 nicht ändert. Letzteres schließt, insbesondere bei einem im Wesentlichen konusförmigen, kegelstumpfförmigen, pyramidenförmigen oder pyramidenstumpfförmigen Siebmantel 8, nicht aus, dass sich die Umfangssegmente 17 bei ihrer Oszillationsbewegung zumindest abschnittsweise auch in eine Richtung mit einem axialen Anteil bewegen. Der die Umfangssegmente 17 haltende Rahmen des Siebmantels 8 bzw. der Siebeinrichtung 7 und die axiale Lagerung des Siebmantels 8 bzw. der Siebeinrichtung 7 sind dann aber dennoch ortsfest.

Mit einer Oszillationsbewegung "quer" zur Drehachse 6 kann sowohl eine Oszillationsbewegung orthogonal zur Drehachse 6 als auch eine Oszillationsbewegung in einem Winkel von ungleich 90° zur Drehachse 6 gemeint sein. Die Drehachse 6 der Siebeinrichtung 7 verläuft, wie Fig. 2 beispielhaft zeigt, insbesondere in Schwerkraftrichtung G. Grundsätzlich ist es aber auch denkbar, die Drehachse 6 zur Schwerkraftrichtung G geneigt anzuordnen.

In der Fig. 2 ist außerdem noch eine Zuführeinrichtung 20 zum Zuführen des Ernteguts ins Innere der Siebeinrichtung 7 sowie ein Gebläse 18, insbesondere ein Sauggebläse, zum Erzeugen eines von schräg unten durch die Siebeinrichtung 7 nach oben verlaufenden Luftstroms 21 dargestellt. Ferner ist eine rotierende Umlenkeinrichtung 22 zum Umlenken und Beschleunigen des mittels der Zuführeinrichtung 20 in die Siebeinrichtung 7 eingeleiteten Ernteguts in radialer Richtung dargestellt.

Die Zuführeinrichtung 20 weist hier und vorzugsweise einen Förderkanal 23 auf, der sich in axialer Richtung erstreckt. Im Innern des Förderkanals 23 ist eine Förderschnecke 24 angeordnet, die sich hier beispielhaft entgegen der Drehbewegung des Siebmantels 8 bzw. der Siebeinrichtung 7 dreht, aber auch in dieselbe Richtung drehen kann. Die Drehbewegung der Förderschnecke 24 ist hier durch einen gebogenen, gegen den Uhrzeigersinn verlaufenden Pfeil 25 dargestellt. Die Förderschnecke 24 fördert das zu entmischende Erntegut in axialer Richtung vom oberen Ende der Siebeinrichtung 7 in Richtung des unteren Endes der Siebeinrichtung 7.

Am unteren Ende des Förderkanals 23 tritt das Erntegut dann in die rotierende Siebeinrichtung 7 aus, wobei das Erntegut hier zunächst auf die rotierende Umlenkeinrichtung 22 trifft. Die Umlenkeinrichtung 22 kann ein Wurfteller sein, der beispielsweise oberseitig Stege aufweist, oder ein randseitig gekröpfter Beschleunigungsteller. Grundsätzlich ist es aber auch denkbar, die Umlenkeinrichtung 22 als ebene Prallplatte auszubilden oder den Boden 19 der Siebeinrichtung 7 als Umlenkeinrichtung 22 vorzusehen. Die Umlenkeinrichtung 22 dreht in dieselbe Richtung wie der Siebmantel 8, um zu verhindern, dass das Erntegut abgebremst wird, sobald es auf den Siebmantel 8 prallt.

Von der Umlenkeinrichtung 22 wird das Erntegut fliehkraftbedingt radial nach außen gegen den Siebmantel 8 gedrückt und dort durch die Oszillationsbewegung vorzugsweise der Umfangssegmente 17 des Siebmantels 8 insbesondere regelmäßig in Richtung der Drehachse 6 geschleudert. Durch diese impulsartige Bewegung des Ernteguts vom Siebmantel 8 in Richtung der Drehachse 6 wird das Korn von den Nichtkornbestandteilen getrennt, da die Körner ein höheres Gewicht als die Nichtkornbestandteile haben. Der von dem Gebläse 18 erzeugte Luftstrom 21 trägt dann die Nichtkornbestandteile nach oben aus der Siebeinrichtung 7 heraus, wohingegen die Körner in Schwerkraftrichtung G wieder zum Boden 19 fallen. Von hier gelangen die Körner dann fliehkraftbedingt und von den Nichtkornbestandteilen befreit durch die Sieblochung im Siebmantel 8 radial nach außen und weiter zum Kornelevator 15. Zur Veranschaulichung der Materialströme sind in Fig. 2 das in die Siebeinrichtung 7 eingeleitete Erntegut mit EG, das von der Siebeinrichtung 7 gereinigte Korn mit K und die von der Siebeinrichtung 7 abgetrennten Nichtkornbestandteile mit NKB bezeichnet.

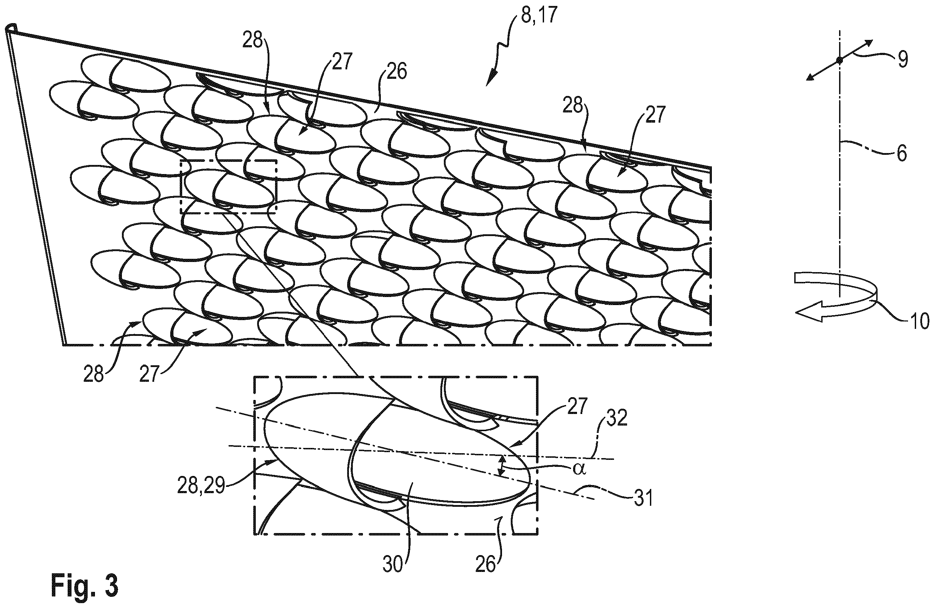

In Fig. 3 ist eine Teilansicht einer der Zuführeinrichtung 20 zugewandten Oberfläche 26 des Siebmantels 8 sowie eine Detailansicht einer Öffnung 27 in der Oberfläche 26 dargestellt. Die Teilansicht zeigt die Oberfläche 26 des Siebmantels 8 bzw. eines Umfangssegmentes 17 in einer zu der Drehachse 6 im Wesentlichen parallelen Ansicht. Zur Abscheidung des Korns K ist die Oberfläche 26 mit Öffnungen 27 durchsetzt. Die jeweilige Öffnung 27 weist einen sich senkrecht zur Oberfläche 26 des Siebmantels 8 erstreckenden Öffnungsquerschnitt auf. Die Gestaltung der Öffnung 27 wird nachfolgend insbesondere unter Bezugnahme auf die Detailansicht erläutert. Der senkrecht verlaufende Öffnungsquerschnitt der Öffnung 27 erstreckt sich in Oszillationsrichtung 9 des Siebmantels 8. Der senkrecht verlaufende Öffnungsquerschnitt ist durch eine in dem Siebmantel 8 im Bereich der jeweiligen Öffnung 27 angeordnete, senkrecht zur Drehachse 6 orientierte Auswölbung 28 der Oberfläche 26 ausgebildet.

Die Auswölbung 28 ist als eine Art Halbschale 29 ausgeführt. Die Halbschale 29 weist in der dargestellten Ausführungsform eine Bogenform auf. Alternativ kann die Halbschale 29 eine Dreieckform aufweisen. Der Radius der Halbschale 29 nimmt ausgehend vom Randbereich des senkrecht zur Oberfläche 26 orientierten Öffnungsquerschnitts in Längsrichtung der Auswölbung 28 ab. Die Öffnung 27 weist in der Oberfläche 26 einen Öffnungsabschnitt 30 auf, welcher eine Erstreckung in Längsrichtung aufweist, die größer als eine Erstreckung in Querrichtung ist. Eine in Längsrichtung der Öffnung 27 verlaufende Längsachse 31 des Öffnungsabschnitts 30 ist unter einem Winkel α ungleich 0° zur Rotationsebene 32 geneigt orientiert. Bevorzugt liegt der Winkel α in einem Bereich von 30° bis 60°.

Die jeweilige Auswölbung 28 ist in Rotationsrichtung 10 der Siebeinrichtung 5 angeordnet, d.h. der senkrecht zur Oberfläche 26 verlaufende Öffnungsquerschnitt der Öffnung 27 ist entgegen der Rotationsrichtung 10 gerichtet. Die jeweilige Auswölbung 28 erstreckt sich ausgehend von der Oberfläche 26 radial nach innen, d.h. in Richtung der Drehachse 6.

Der Öffnungsabschnitt 30 schließt sich an die Auswölbung 28 der jeweiligen Öffnung 27 in Längsrichtung gesehen derart an, dass der Öffnungsabschnitt 30 und die Auswölbung 28 einen im Wesentlichen ellipsoiden Umriss aufweisen. Hierzu kann der Öffnungsabschnitt 30 eine komplementär zur Auswölbung 28 geformte Außenkontur aufweisen.

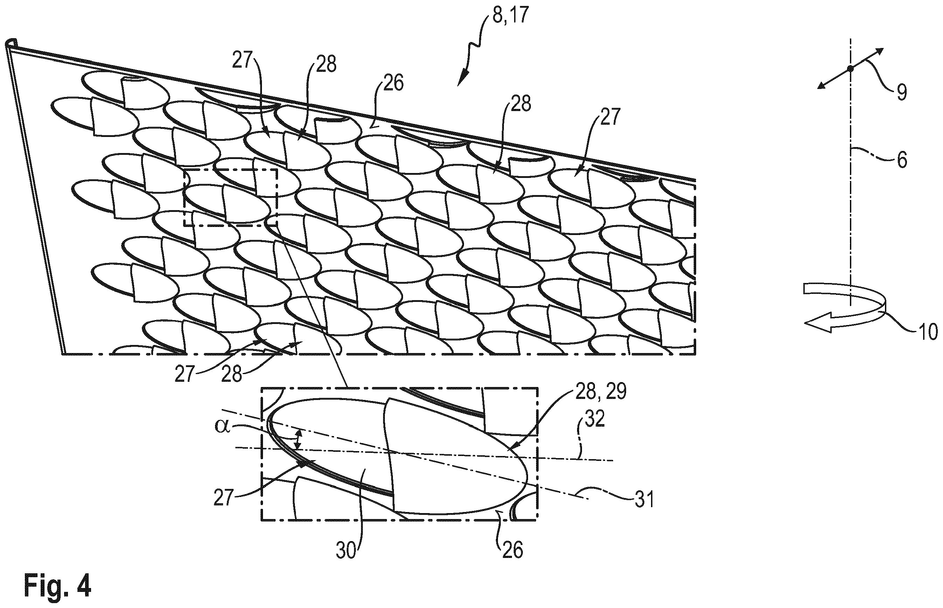

Fig. 4 zeigt eine schematische Teilansicht der Oberfläche 26 des Siebmantels 8 bzw. des Umfangssegmentes 17 sowie eine Detailansicht einer Öffnung 27 in der Oberfläche 26 gemäß einer weiteren Ausführungsform. Die in Fig. 4 gezeigte eine alternative Ausführungsform unterscheidet sich von der Ausführungsform gemäß Fig. 3 nur dadurch, dass die jeweilige Auswölbung 28 entgegen der Rotationsrichtung 10 der Siebeinrichtung 5 angeordnet sind, d.h. der senkrecht zur Oberfläche 26 verlaufende Öffnungsquerschnitt der Öffnung 27 weist in Rotationsrichtung 10.

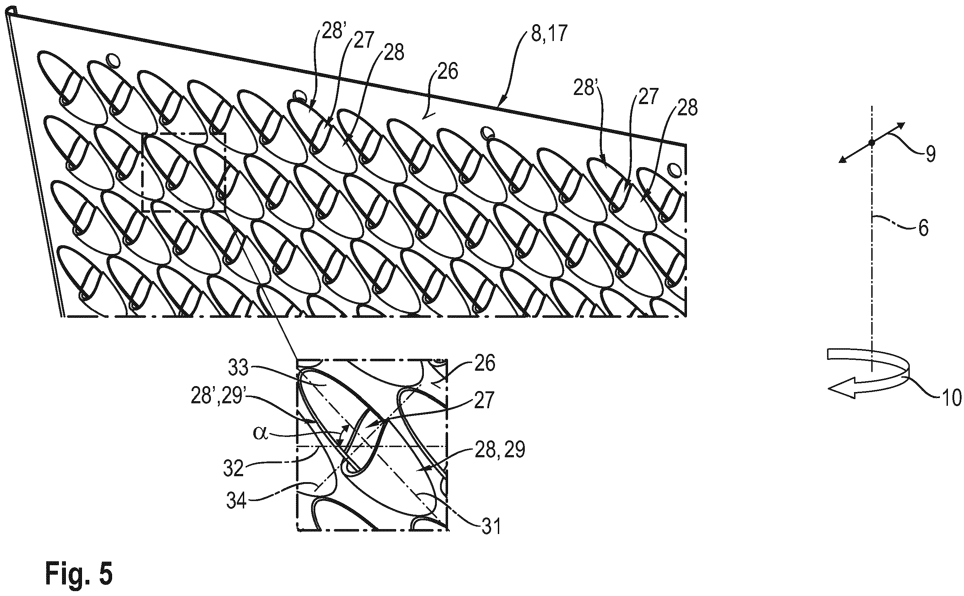

In Fig. 5 ist eine schematische Teilansicht der Oberfläche 26 des Siebmantels 8 bzw. des Umfangssegmentes 17 sowie eine Detailansicht einer Öffnung in der Oberfläche 26 gemäß einer dritten Ausführungsform dargestellt. Gemäß dieser dritten Ausführungsform ist der sich senkrecht zur Oberfläche 26 des Siebmantels 8 erstreckende Öffnungsquerschnitt einer jeweiligen Öffnung 27 durch jeweils zwei Auswölbungen 28, 28' begrenzt, die einander gegenüberliegend und mit gegensinniger radialer Erstreckung an der Oberfläche 26 des Siebmantels 8 angeordnet sind. Die beiden Auswölbungen 28, 28' sind ebenfalls als Halbschalen 29, 29' ausgeführt. Im dargestellten Ausführungsbeispiel ist die als Halbschale 29 ausgeführte Auswölbung 28, die sich radial nach innen in Richtung der Drehachse 6 erstreckt, entgegen der Rotationsrichtung 10 der Siebeinrichtung 5 angeordnet. D.h. der senkrecht zur Oberfläche 26 verlaufende Öffnungsquerschnitt der Öffnung 27 ist entgegen der Rotationsrichtung 10 gerichtet.

Die weitere, als Halbschale 29' ausgeführte Auswölbung 28' ist der Auswölbung 28 gegenüberliegend angeordnet und erstreckt sich ausgehend von der Oberfläche 26 des Siebmantels 8 radial nach außen, d.h. in eine der Drehachse 6 abgewandte Richtung. Durch die bevorzugt bogenförmige Kontur der Halbschale 29' bildet sich eine Senke 33 aus, in die das Korn K hineingleiten kann, um durch den senkrecht verlaufenden Öffnungsquerschnitt der Öffnung 27 auszutreten. Der Öffnungsquerschnitt kann entsprechend der Kontur der Auswölbungen 28 und 28' im Wesentlichen kreisförmig oder ellipsoid ausgeführt sein. Alternativ kann die Anordnung der Auswölbungen 28,28' an ihrer Querachse 34 gespiegelt erfolgen, d.h. die Auswölbung 28 erstreckt sich, bezogen auf die Drehachse 6, radial nach außen, während die Auswölbung 28' sich radial nach innen erstreckt.

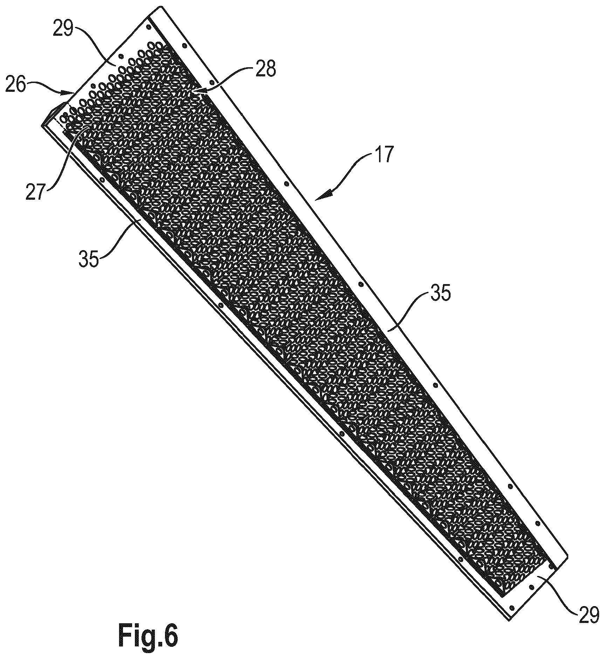

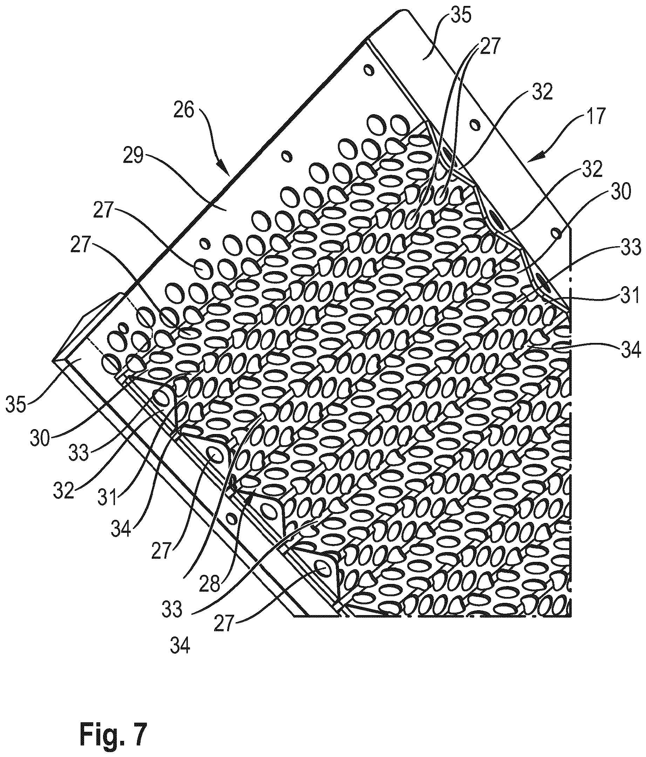

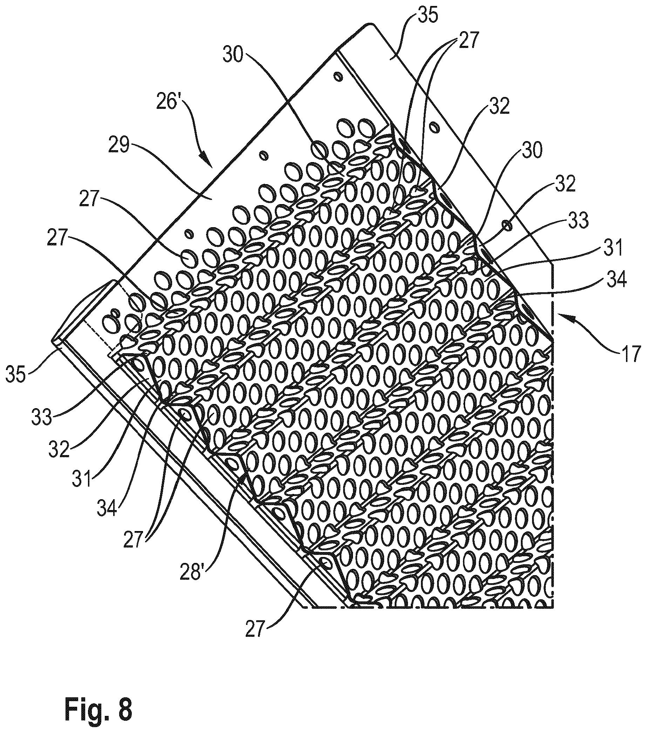

In Fig. 6 ist eine schematische Darstellung eines Umfangsegmentes 17 des Siebmantels 8 der Reinigungseinrichtung 5 gezeigt. Das Umfangsegment 17 weist eine Oberfläche 26 auf, die mit einer Vielzahl von Öffnungen 27 versehen ist. Durch die Öffnungen 27 wird das Korn K nach außen abgeschieden. In der hier dargestellten Ausführungsform weisen die Öffnungen 27 keine der bereits zuvor näher beschriebenen Auswölbungen (28, 28') auf, es sei jedoch darauf hingewiesen, dass diese ebenfalls mit derartigen Auswölbungen (28, 28') versehen werden können. Die Oberfläche 26 weist eine im Wesentlichen wellenförmige Struktur 35 auf. Die im Wesentlichen wellenförmige Struktur 35 verläuft in Längsrichtung des Umfangsegmentes 17 und erstreckt sich nahezu über die gesamte Längsausdehnung des Umfangsegmentes 17. Das Umfangsegment 17 ist von Rahmensegmenten 36 umfasst, zwischen denen die Oberfläche 26 angeordnet ist. Der Aufbau und die Gestalt der im Wesentlichen wellenförmige Struktur 35 wird anhand zweier bevorzugter Ausführungsformen, die in den Fig. 7 und 8 gezeigt sind, beschrieben. Die Darstellung in Fig. 7 zeigt schematisch eine perspektivische Teilansicht einer Oberfläche 26 des Umfangsegmentes 17 gemäß Fig. 6. Die Oberfläche 26 ist in Längsrichtung des Umfangsegmentes 17 nahezu durchgehend als eine periodisch gestufte oder abgewinkelte Struktur 35 ausgeführt. Der periodische Verlauf der Struktur 35 wird erreicht, indem ausgehend von einem ebenem, d.h. sich im Wesentlichen parallel zur Drehachse erstreckenden, äußeren Randabschnitt 37 der Oberfläche 26 ein erster Abschnitt 38 der Oberfläche 26 einen Anstieg aufweist, d.h. einen abnehmenden radialen Abstand in Bezug auf die Drehachse 6. Nach dem Passieren eines ersten Scheitel- oder Wendepunktes 39 weist die Struktur 35 einen zweiten Abschnitt 40 mit einer negativen Steigung auf, d.h. einen zunehmenden radialen Abstand in Bezug auf die Drehachse 6. Nach dem Passieren eines zweiten Scheitel- oder Wendepunktes 41 schließen sich wechselweise ein weiterer erster Abschnitt 38 und ein darauffolgender zweiter Abschnitt 40 an. Diese Ausprägung der Struktur 35 setzt sich in axialer Richtung periodisch fort.

Gemäß der in Fig. 7 dargestellten Ausführungsform der Struktur 35 der Oberfläche 26 weist diese Struktur 35 im Längsschnitt im Wesentlichen die Form eines gleichschenkligen Dreiecks auf. Jeder erste Abschnitt 38 und jeder zweite Abschnitt 40 der Struktur 35 ist mit einer Vielzahl von Öffnungen 27 ausgeführt. Die Struktur 35 der Oberfläche 26 ist an ihren Außenseiten durch Abdeckelemente 42 begrenzt, um ein unkontrolliertes und ungewolltes Hindurchtreten von Erntegut EG, insbesondere von Nichtkornbestandteilen NKB, zu verhindern. Die Abdeckelemente 42 weisen eine an die Struktur 35 der Oberfläche 26 angepasste Kontur auf. Die Abdeckelemente 42 können mit zumindest einer Öffnung 27 ausgeführt sein, damit Korn K hindurchtreten kann. Bevorzugt können die Abdeckelemente 42 als Teil der das Umfangsegment 17 umfassenden Rahmenelemente 43 ausgeführt sein.

Die Darstellung in Fig. 8 zeigt schematisch eine perspektivische Teilansicht des Umfangsegmentes 17 gemäß Fig. 6 mit einer Oberfläche 26' gemäß einer zweiten Ausführungsform. Die Oberfläche 26' weist ebenfalls eine im Wesentlichen wellenförmige Struktur auf. Die Oberfläche 26' ist in Längsrichtung des Umfangsegmentes 17 nahezu durchgehend als eine periodisch gestufte oder abgewinkelte Struktur ausgeführt. Zur Vermeidung von Wiederholungen wird hinsichtlich der Periodizität der Struktur auf die Ausführungen hierzu weiter oben verwiesen.

Die Struktur unterscheidet sich von der in Fig. 4 dargestellten Struktur 35 dadurch, dass die Struktur im Längsschnitt im Wesentlichen die Form eines spitzwinkligen Dreiecks aufweist. Bevorzugt kann die Struktur im Längsschnitt im Wesentlichen die Form eines rechtwinkligen Dreiecks aufweisen.

Weiterhin kann die die Struktur der Sieboberfläche des Siebmantels oder der Umfangsegmente gemäß einer nicht dargestellten Ausführungsform einen Längsschnitt aufweisen, der im Wesentlichen der Form von hintereinander angeordneten Kreisbögen entspricht.

Insbesondere kann die Anzahl der Öffnungen 27 mit in axialer Richtung zunehmendem Durchmesser des Siebmantels 8 bei allen gezeigten Ausführungsformen abnehmen. D.h., dass im Bereich des kleinsten Durchmessers des Siebmantels 8, insbesondere oberhalb des Bodens 19, die Anzahl der Öffnungen 27 am höchsten sein kann, wodurch sich hier die größte freidurchströmte Sieboberfläche 26, 26' des Siebmantels 8 ergibt.

**Bezugszeichenliste**

| | | | |
|---|---|---|---|
| 1 | Mähdrescher | 29 | Halbschale |
| 2 | Feldbestand | 29' | Halbschale |
| 3 | Einzugsanordnung | 30 | Öffnungsabschnitt |
| 4 | Drescheinrichtung | 31 | Längsachse |
| 5 | Reinigungseinrichtung | 32 | Rotationsebene |
| 6 | Drehachse | 33 | Senke |
| 7 | Siebeinrichtung | 34 | Querachse |
| 8 | Siebmantel | 35 | Struktur von 26 |
| 9 | Pfeil für Oszillationsbewegung | | |
| 10 | Pfeil für Drehbewegung | | |
| 11 | Vorsatzanordnung | | |
| 12 | Schneidwerk | | |
| 13 | Schrägförderer | | |
| 14 | Trenneinrichtung | | |
| 15 | Kornelevator | | |
| 16 | Korntank | | |
| 17 | Umfangssegment | | |
| 18 | Gebläse | | |
| 19 | Boden | α | Winkel |
| 20 | Zuführeinrichtung | EG | Zu entmischendes Erntegut |
| 21 | Luftstrom | G | Schwerkraftrichtung |
| 22 | Umlenkeinrichtung | K | Anteil Korn |
| 23 | Förderkanal | NKB | Anteil Nichtkornbestandteile |
| 24 | Förderschnecke | | |
| 25 | Pfeil Drehbewegung | | |
| 26 | Oberfläche | | |
| 26' | Oberfläche | | |
| 27 | Öffnung | | |
| 28 | Auswölbung | | |
| 28' | Auswölbung | | |

## Patentansprüche

1. Mähdrescher (1) mit einer Reinigungseinrichtung (5), welche Bestandteile eines Erntegutstroms in Korn (K) und Nichtkornbestandteile (NKB) durch Entmischen trennt, wobei die Reinigungseinrichtung (5) eine um eine Drehachse (6) rotierende Siebeinrichtung (7) mit einem zumindest abschnittsweise siebförmigen Siebmantel (8), der sich in einer Umfangsrichtung um die Drehachse (6) erstreckt, aufweist, wobei die Entmischung durch Überlagerung einer Drehbewegung und einer quer zur Drehachse (6) orientierten Oszillationsbewegung des Siebmantels (8) erfolgt, wobei der Siebmantel (8) eine mit Öffnungen (27) durchsetzte Oberfläche (26, 26') aufweist, **dadurch gekennzeichnet, dass** die jeweilige Öffnung (27) einen sich senkrecht zur Oberfläche (26, 26') des Siebmantels (8) erstreckenden Öffnungsquerschnitt aufweist, welcher durch zumindest eine in dem Siebmantel (8) im Bereich der jeweiligen Öffnung (27) angeordnete, senkrecht zur Drehachse (6) orientierte Auswölbung (28, 28') der Oberfläche (26, 26') begrenzt ist und dass die Oberfläche (26, 26') eine im Wesentlichen wellenförmige Struktur (35) aufweist.

2. Mähdrescher (1) nach Anspruch 1, **dadurch gekennzeichnet, dass** die zumindest eine Auswölbung (28, 28') als eine Halbschale (29, 29') ausgeführt ist.

3. Mähdrescher (1) nach Anspruch 1 oder 2, **dadurch gekennzeichnet, dass** die zumindest eine Auswölbung (28, 28') jeweils in Rotationsrichtung (10) oder entgegen der Rotationsrichtung (10) der Siebeinrichtung (7) angeordnet ist.

4. Mähdrescher (1) nach einem der Ansprüche 1 bis 3, **dadurch gekennzeichnet, dass** die zumindest eine Auswölbung (28, 28') sich radial nach innen erstreckt.

5. Mähdrescher (1) nach einem der Ansprüche 1 bis 4, **dadurch gekennzeichnet, dass** die zumindest eine Auswölbung (28, 28') unter einem Winkel (a) ungleich 0° zur Rotationsebene (32) der Auswölbung (28, 28') geneigt orientiert ist.

6. Mähdrescher (1) nach einem der Ansprüche 1 bis 5, **dadurch gekennzeichnet, dass** die jeweilige Öffnung (27) in der Oberfläche (26, 26') einen Öffnungsabschnitt (30) aufweist, welcher eine Erstreckung in Längsrichtung aufweist, die größer als eine Erstreckung in Querrichtung ist, wobei eine in Längsrichtung verlaufende Längsachse (31) des Öffnungsabschnitts (30) unter einem Winkel (a) ungleich 0° zur Rotationsebene (32) der Auswölbung (28, 28') geneigt orientiert ist.

7. Mähdrescher (1) nach Anspruch 6, **dadurch gekennzeichnet, dass** sich der Öffnungsabschnitt (30) an die Auswölbung (28) der jeweiligen Öffnung (27) derart anschließt, dass der Öffnungsabschnitt (30) und die Auswölbung (28, 28') einen im Wesentlichen ellipsoiden Umriss aufweisen.

8. Mähdrescher (1) nach einem der vorangehenden Ansprüche, **dadurch gekennzeichnet, dass** der sich senkrecht zur Oberfläche (26, 26') des Siebmantels (8) erstreckende Öffnungsquerschnitt einer jeweiligen Öffnung (27) durch jeweils zwei Auswölbungen (28, 28') begrenzt ist, die einander gegenüberliegend und mit gegensinniger radialer Erstreckung an der Oberfläche (26, 26') des Siebmantels (8) angeordnet sind.

9. Mähdrescher (1) nach einem der vorangehenden Ansprüche, **dadurch gekennzeichnet, dass** die Öffnungen (27) symmetrisch oder asymmetrisch verteilt auf der Oberfläche (26, 26') des Siebmantels (8) angeordnet sind.

10. Mähdrescher (1) nach einem der vorangehenden Ansprüche, **dadurch gekennzeichnet, dass** der Siebmantel (8) sich zu seinem unteren Ende hin verjüngt, wobei die Anzahl der Öffnungen (27) auf der Oberfläche (26, 26') in Abhängigkeit von einem sich in axialer Richtung der Siebeinrichtung (7) ändernden Durchmesser des Siebmantels (8) variiert.

11. Mähdrescher (1) nach Anspruch 1, **dadurch gekennzeichnet, dass** die Struktur der Oberfläche (26, 26') in axialer Richtung der Siebeinrichtung (7) im Wesentlichen abgewinkelt oder gestuft ausgeführt ist.

12. Mähdrescher (1) nach einem der Ansprüche 1 bis 11, **dadurch gekennzeichnet, dass** der Siebmantel (8) über seinen Umfang verteilt mehrere Umfangssegmente (17) aufweist, deren Oberfläche (26, 26') in axialer Richtung der Siebeinrichtung (7) abgewinkelt oder gestuft ausgeführt ist.

13. Mähdrescher (1) nach einem der Ansprüche 1 bis 12, **dadurch gekennzeichnet, dass** die Struktur (35) einen Längsschnitt aufweist, der im Wesentlichen der Form von hintereinander angeordneten gleichschenkligen Dreiecken entspricht.

14. Mähdrescher (1) nach einem der Ansprüche 1 bis 12, **dadurch gekennzeichnet, dass** die Struktur (35) einen Längsschnitt aufweist, der im Wesentlichen der Form von hintereinander angeordneten rechtwinkligen Dreiecken entspricht.

15. Mähdrescher (1) nach einem der vorangehenden Ansprüche, **dadurch gekennzeichnet, dass** die Struktur (35) in Längsrichtung der Oberfläche (26, 26') einen periodischen Verlauf aufweist.

16. Mähdrescher (1) nach Anspruch 15, **dadurch gekennzeichnet, dass** die Oberfläche (26, 26') einen ersten Abschnitt mit einem Anstieg aufweist, der zu einem abnehmenden radialen Abstand in Bezug auf die Drehachse (6) führt und dass nach einem Passieren eines ersten Scheitel- oder Wendepunktes sich ein zweiter Abschnitt mit einer negativen Steigung anschließt, was zu einem zunehmenden radialen Abstand in Bezug auf die Drehachse (6) führt.

17. Mähdrescher (1) nach Anspruch 1, **dadurch gekennzeichnet, dass** die Struktur (35) einen Längsschnitt aufweist, der im Wesentlichen der Form von hintereinander angeordneten Kreisbögen entspricht.

18. Mähdrescher (1) nach einem der Ansprüche 1 bis 17, **dadurch gekennzeichnet, dass** die Struktur (35) der Oberfläche (26, 26') an ihren Außenseiten durch Abdeckelemente begrenzt ist.

## Claims

1. A combine harvester (1) with a cleaning device (5) which separates components of a flow of harvested material into grain (K) and non-grain components (NKB) by segregation, wherein the cleaning device (5) has a screen device (7) which rotates about an axis of rotation (6) and has a screen wall (8) which is in the form of a screen at least in sections, which extends in a circumferential direction about the axis of rotation (6), wherein the segregation is carried out by superimposing a rotary motion and an oscillatory motion of the screen wall (8) transversely to the axis of rotation (6), wherein the screen wall (8) has a surface (26, 26') with through openings (27), **characterized in that** the respective opening (27) has an opening cross section extending perpendicular to the surface (26, 26') of the screen wall (8) which is bordered by at least one bulge (28, 28') of the surface (26, 26') which is orientated perpendicular to the axis of rotation (6) and is disposed in the screen wall (8) in the region of the respective opening (27), and **in that** the surface (26, 26') has a substantially undulating structure (35).

2. The combine harvester (1) according to claim 1, **characterized in that** the at least one bulge (28, 28') is configured as a half-shell (29, 29').

3. The combine harvester (1) according to claim 1 or claim 2, **characterized in that** the at least one bulge (28, 28') is respectively disposed in the direction of rotation (10) or opposite to the direction of rotation (10) of the screen device (7).

4. The combine harvester (1) according to one of claims 1 to 3, **characterized in that** the at least one bulge (28, 28') extends radially inwardly.

5. The combine harvester (1) according to one of claims 1 to 4, **characterized in that** the at least one bulge (28, 28') is orientated at an angle of inclination (a)to the plane of rotation (32) of the bulge (28, 28') which is not equal to 0°.

6. The combine harvester (1) according to one of claims 1 to 5, **characterized in that** the respective opening (27) in the surface (26, 26') has an opening section (30) which has an extent in the longitudinal direction that is larger than an extent in the transverse direction, wherein a longitudinal axis (31) of the opening section (30) running in the longitudinal direction is orientated at an angle of inclination (a) to the plane of rotation (32) of the bulge (28, 28') which is not equal to 0°.

7. The combine harvester (1) according to claim 6, **characterized in that** the opening section (30) is attached to the bulge (28) of the respective opening (27) in a manner such that the opening section (30) and the bulge (28, 28') have a substantially elliptical contour.

8. The combine harvester (1) according to one of the preceding claims, **characterized in that** the opening cross section of a respective opening (27) extending perpendicular to the surface (26, 26') of the screen wall (8) is respectively bordered by two bulges (28, 28') which are disposed on the surface (26, 26') of the screen wall (8) opposite each other and extending in opposing radial directions.

9. The combine harvester (1) according to one of the preceding claims, **characterized in that** the openings (27) are distributed symmetrically or asymmetrically over the surface (26, 26') of the screen wall (8).

10. The combine harvester (1) according to one of the preceding claims, **characterized in that** the screen wall (8) tapers towards its lower end, wherein the number of openings (27) on the surface (26, 26') varies as a function of a diameter of the screen wall (8) which varies in the axial direction of the screen device (7).

11. The combine harvester (1) according to claim 1, **characterized in that** in the axial direction of the screen device (7), the structure of the surface (26, 26') is substantially angled or stepped.

12. The combine harvester (1) according to one of claims 1 to 11, **characterized in that** the screen wall (8) has a plurality of circumferential segments (17) distributed around its circumference, the surface (26, 26') of the circumferential segments being angled or stepped in the axial direction of the screen device (7).

13. The combine harvester (1) according to one of claims 1 to 12, **characterized in that** the structure (35) has a longitudinal section the shape of which substantially corresponds to isosceles triangles which are disposed consecutively.

14. The combine harvester (1) according to one of claims 1 to 12, **characterized in that** the structure (35) has a longitudinal section the shape of which substantially corresponds to right angled triangles which are disposed consecutively.

15. The combine harvester (1) according to one of the preceding claims, **characterized in that** the structure (35) has a periodic profile in the longitudinal direction of the surface (26, 26').

16. The combine harvester (1) according to claim 15, **characterized in that** the surface (26, 26') has a first section with an upwards inclination which results in a reducing radial distance with respect to the axis of rotation (6) and **in that** after passing through a first apex or point of inflexion, it leads on to a second section with a negative inclination which results in an increasing radial distance with respect to the axis of rotation (6).

17. The combine harvester (1) according to claim 1, **characterized in that** the structure (35) has a longitudinal section which substantially corresponds to the shape of circular arcs which are disposed consecutively.

18. The combine harvester (1) according to one of claims 1 to 17, **characterized in that** the outer sides of the structure (35) of the surface (26, 26') is bordered by cover elements.

## Revendications

1. Moissonneuse-batteuse (1) comprenant un équipement de nettoyage (5) qui sépare par dissociation des composants d'un flux de produit récolté en grain (K) et en composants non-grains (NKB), l'équipement de nettoyage (5) comportant un équipement de grille (7) tournant autour d'un axe de rotation (6) avec une surface enveloppante de grille au moins par endroits en forme de grille (8) qui s'étend dans une direction circonférentielle autour de l'axe de rotation (6), la dissociation s'effectuant par superposition d'un mouvement tournant et d'un mouvement oscillant, orienté transversalement à l'axe de rotation (6), de la surface enveloppante de grille (8), la surface enveloppante de grille (8) comportant une surface supérieure (26, 26') percée d'ouvertures (27), **caractérisée en ce que** l'ouverture respective (27) présente une section transversale d'ouverture qui s'étend perpendiculairement à la surface supérieure (26, 26') de la surface enveloppante de grille (8) et qui est limitée par au moins un bombement (28, 28') de la surface supérieure (26, 26') disposé dans la surface enveloppante de grille (8) dans la zone de l'ouverture respective (27), orienté perpendiculairement à l'axe de rotation (6), et **en ce que** la surface supérieure (26, 26') présente une structure (35) sensiblement ondulée.

2. Moissonneuse-batteuse (1) selon la revendication 1, **caractérisée en ce que** le au moins un bombement (28, 28') est conformé en demi-coque (29, 29').

3. Moissonneuse-batteuse (1) selon la revendication 1 ou 2, **caractérisée en ce que** le au moins un bombement (28, 28') est disposé respectivement dans le sens de rotation (10) ou à l'opposé du sens de rotation (10) de l'équipement de grille (7) .

4. Moissonneuse-batteuse (1) selon une des revendications 1 à 3, **caractérisée en ce que** le au moins un bombement (28, 28') s'étend radialement vers l'intérieur.

5. Moissonneuse-batteuse (1) selon une des revendications 1 à 4, **caractérisée en ce que** le au moins un bombement (28, 28') est orienté de façon inclinée selon un angle (α) différent de 0° par rapport au plan de rotation (32) du bombement (28, 28') .

6. Moissonneuse-batteuse (1) selon une des revendications 1 à 5, **caractérisée en ce que** l'ouverture respective (27) dans la surface supérieure (26, 26') comporte une portion d'ouverture (30) qui présente une extension dans la direction longitudinale qui est supérieure à l'extension dans la direction transversale, un axe longitudinal (31) de la portion d'ouverture (30) s'étendant dans la direction longitudinale étant orienté de manière inclinée selon un angle (α) différent de 0° par rapport au plan de rotation (32) du bombement (28, 28').

7. Moissonneuse-batteuse (1) selon la revendication 6, **caractérisée en ce que** la portion d'ouverture (30) se raccorde au bombement (28) de l'ouverture respective (27) de façon que la portion d'ouverture (30) et le bombement (28, 28') présentent un contour sensiblement ellipsoïde.

8. Moissonneuse-batteuse (1) selon une des revendications précédentes, **caractérisée en ce que** la section transversale d'ouverture d'une ouverture respective (27) s'étendant perpendiculairement à la surface supérieure (26, 26') de la surface enveloppante de grille (8) est limitée par respectivement deux bombements (28, 28') qui sont disposés sur la surface supérieure (26, 26') de la surface enveloppante de grille (8) en vis-à-vis l'un de l'autre et avec une extension radiale opposée.

9. Moissonneuse-batteuse (1) selon une des revendications précédentes, **caractérisée en ce que** les ouvertures (27) sont disposées en étant réparties symétriquement ou asymétriquement sur la surface supérieure (26, 26') de la surface enveloppante de grille (8).

10. Moissonneuse-batteuse (1) selon une des revendications précédentes, **caractérisée en ce que** la surface enveloppante de grille (8) se rétrécit vers son extrémité inférieure, le nombre des ouvertures (27) sur la surface supérieure (26, 26') variant en fonction d'un diamètre de la surface enveloppante de grille (8) qui varie dans la direction axiale de l'équipement de grille (7) .

11. Moissonneuse-batteuse (1) selon la revendication 1, **caractérisée en ce que** la structure de la surface supérieure (26, 26') dans la direction axiale de l'équipement de grille (7) est conçue de façon sensiblement coudée ou étagée.

12. Moissonneuse-batteuse (1) selon une des revendications 1 à 11, **caractérisée en ce que** la surface enveloppante de grille (8) comporte, répartis sur sa périphérie, plusieurs segments périphériques (17) dont la surface supérieure (26, 26') dans la direction axiale de l'équipement de grille (7) est conçue de façon coudée ou étagée.

13. Moissonneuse-batteuse (1) selon une des revendications 1 à 12, **caractérisée en ce que** la structure (35) présente une coupe longitudinale qui correspond sensiblement à la forme de triangles équilatéraux disposés les uns derrière les autres.

14. Moissonneuse-batteuse (1) selon une des revendications 1 à 12, **caractérisée en ce que** la structure (35) présente une coupe longitudinale qui correspond sensiblement à la forme de triangles rectangles disposés les uns derrière les autres.

15. Moissonneuse-batteuse (1) selon une des revendications précédentes, **caractérisée en ce que** la structure (35) présente, dans la direction longitudinale de la surface supérieure (26, 26'), un tracé périodique.

16. Moissonneuse-batteuse (1) selon la revendication 15, **caractérisée en ce que** la surface supérieure (26, 26') comporte une première portion avec une pente qui provoque une distance radiale décroissante par rapport à l'axe de rotation (6) et **en ce que**, après avoir passé un premier point culminant ou de rebroussement, une seconde portion se raccorde avec une pente négative, ce qui provoque une distance radiale croissante par rapport à l'axe de rotation (6).

17. Moissonneuse-batteuse (1) selon la revendication 1, **caractérisée en ce que** la structure (35) présente une coupe longitudinale qui correspond sensiblement à la forme d'arcs de cercle disposés les uns derrière les autres.

18. Moissonneuse-batteuse (1) selon une des revendications 1 à 17, **caractérisée en ce que** la structure (35) de la surface supérieure (26, 26') est limitée sur ses côtés extérieurs par des éléments de recouvrement.
